# EUROPEAN PATENT APPLICATION

(11) **EP 0 876 049 A2**
(43) Date of publication of application: **04.11.1998**
(21) Application number: 98201223.9
(22) Date of filing: 16.04.1998
(51) Int. Cl.: H04N 1/00, G09B 5/06

(54) **Method and apparatus for producing audio-enhanced hard copy image prints selected from a motion image sequence and accompanying sound stored on an electronic image storage medium**

(30) Priority: 28.04.1997 US 847441
(71) Applicant: EASTMAN KODAK COMPANY, Rochester, New York 14650 (US)
(72) Inventor: Hutchinson, William J., c/o Eastman Kodak Company, Rochester, New York 14650-2201 (US)
(74) Representative: Lewandowsky, Klaus, Dipl.-Ing.

(57) **Abstract**

An audio enhanced display (10) of selected images is provided by selection of time-spaced images (32a-d) from a recorded motion sequence of images coupled with transfer of a segment of associated recorded audio from the motion sequence which brackets the selected time-spaced image (32a-d) in the motion sequence. The result is the pleasurable viewing experience of an image print display providing a quasi motion sensation with associated audio spanning the sequence to enhance the motion sensation.

## Description

This invention relates to the reproduction of audio-enhanced hard copy images selected from an electronic image storage medium having accompanying sound stored on the medium.

The availability of digital hardware apparatus such as video frame capture boards for personal computers and desktop color video printers has allowed video signals to be utilized in a variety of new applications such as producing color still photographs from a single frame of the motion video signal. In some instances, adjacent frames from an interlaced video signal are used to produce a higher quality still image from the video signal.

One limitation of a still image produced from a motion video signal is that the image is taken out of context. If there were significant motion and/or sound in the original scene, much information about the scene would be lost in the still picture. However, there is a strong desire from users of video camcorder equipment to share the viewing and listening experience with others. One limitation in sharing the viewing and listening experience of recorded motion video images with others is the need for special playback equipment such as a television monitor and a video tape recorder. Another limitation is the need to scan through a recorded video to get to the section of the tape of highest interest. In many cases, the section of interest may only be a few minutes or seconds of a one or two hour video tape. A still picture of a single video frame, even if it is of high quality, does not provide the viewing experience that viewing video images provides since the concept of motion in the original video is lost. In addition, any enhancement to the viewing experience that may have resulted from information recorded on the audio track is also lost with the still image.

There are many instances where an audio recording describing a still picture, poster, menu or other visual icon adds value. Audio captured at the time of picture-taking helps to recall details about the image and conveys a sense of the environment at the time the picture was taken. Prior attempts to provide audio with still images have been made, but these prior art systems have numerous problems. Synchronization of the audio and pictorial information is difficult because they are generally recorded on different media such as audio tape separate from the photographic film.

Many prior art systems that enable a camera to capture audio with images intrusively block part of the image with codes and symbols. In other prior art systems, the user must keep the right audio recording with the right image, which is difficult for even a small number of images. The images and sound easily become separated and unmanageable.

Other prior art systems involving methods for adding sound to still pictures don't provide for camera-recorded sound to he captured and transferred to the final print. They are largely picture frames intended to display a single still photograph that incorporate a sound chip, speaker and microphone. The sound is added after the picture is taken and photographic prints are selected. The intent is to provide a means for adding voice annotation later to describe details about the picture or to extend a personal greeting to enhance the emotional appeal of the picture when it is given as a gift.

In the past, numerous methods have been proposed to improve the image quality of photorealistic color still images produced from video signals. In US-A-4,797,942 a pyramid processor is discussed for building a large area, high resolution image from a magnitude of small video images. A similar method is also discussed in US-A-5,187,754. Deinterlacing techniques to reduce motion artifacts in still images derived from motion video sources are described in US-A-5,134,480, US-A-4,785,351 and US-A-5,021,870. In each case the methodology and apparatus are intended to produce the same result, a high quality still image.

Commercially available plastic frames bearing audio recording and playback electronics are sold under the tradename Magic Talking Pictures. The consumer attaches a frame to the photograph and then records audio. The frames contain complete audio playback electronics, including speaker and batteries. US-A-5,359,374 describes apparatus for adding sound to a picture frame to enhance a still picture. Limitations with these systems are:
1. There is no automated means to insure that the right audio gets associated with the picture panel.
2. The frames are designed to accommodate print formats that enhance the display of single still images.

A sound photosystem is described in US-A-5,128,700 and US-A-5,313,235. The camera allows recording of audio at the time of image capture with the audio being stored on a detachable IC memory card. The association between the audio and the image is done in the camera. When audio has been recorded, the camera masks off a portion of the negative film image to provide an area in which is exposed coded audio address information. The coded area then, as part of the negative, ideally appears in a corner of the photograph when printed. To hear the audio, the user must locate the audio memory IC card, insert it into a player apparatus, then slide the print into the apparatus in a manner that scans the coded audio address. Major problems with this approach are:
1. The audio and images are separated, not integral. The user must somehow keep the right image with the right sound card from the camera through print playback.
2. Photofinishers do not print negatives in their entirety. In fact, the portion of the negative printed is quite variable, in the position of the printed portion relative to edges of the negative image frame as well as in the magnification from negative to print. Thus, it will be difficult to insure that the coded audio address information will appear on the prints.
3. The photo is less desirable, as the masked-off bar code area intrudes into the image.
4. To encode all of the specified data described, a fairly large area of the negative will be blocked. For example, a standard bar code like Code 39 requires 9 bars for each digit encoded. Thus, a series of digits conveying the IC card #, the number of times the card has been erased, the address offset to a particular recording, and a clock track of equal length will consume a significant area of the negative.
5. To play back audio for a photo, this scheme provides no alternative other than to physically move the photo into the player. Removing every picture from an album to play sound and then re-albuming, is very inconvenient.

None the prior art describes a method or intent to produce a more realistic rendering of the motion in the original scene in a still picture. It is therefore desirable to provide a means to capture a series of still frames from a motion sequence along with a portion of the continuous sound track recorded at the time of capture. It is also desirable to provide apparatus that enables one to display the still frames as a series of high quality images in a composite still print and to transfer the sound track to a storage and playback device associated with the printed image, in a way that is inseparable, non-intrusive of the image, and not damaging or bulky. It is toward this end that the present invention is directed.

In accordance with one aspect of the invention, there is provided a method of creating audio enhanced human viewable images from a sequence of electronically recorded motion images captured with associated audio on an electronic recording medium, wherein the method comprises extracting a selected plurality of image frames from the sequence of electronically recorded motion images; transferring a segment of recorded audio bracketing the selected plurality of image frames onto an electronic memory medium; reproducing the extracted image frames onto a human viewable image presentation medium suitable for mounting in a viewing device, the viewing device having audio playback apparatus attached thereto; and mounting the image presentation medium and the electronic memory medium on the viewing device, the electronic memory being connected to the audio playback apparatus to enable playback of the audio segment bracketing the selected plurality of image frames from the motion sequence.

In another aspect of the invention, a system for creating audio-enhanced human viewable images from a sequence of motion image frames captured with an associated audio signal on an electronic image recording medium comprises image signal reading apparatus for extracting selected time-spaced image frames from the motion sequence as a series of digital image signals and print apparatus for converting the selected digital image signals into human viewable images on an image presentation medium in a format enabling viewing of all of the selected images. The system includes an image viewing device adapted to receive the image presentation medium for mounting thereon; audio playback apparatus operatively coupled with the image viewing device; and an audio storage device separate from the electronic image recording medium. The system further includes audio signal extraction apparatus for transferring a segment of the associated audio signal bracketing the selected image frames from the electronic image recording medium onto the audio storage device; and means for electrically coupling the audio storage device with the audio playback apparatus allowing playing the audio while viewing the selected images.

These and other aspects, objects, features and advantages of the present invention will be more clearly understood and appreciated from a review of the following detailed description of the preferred embodiments and appended claims, and by reference to the accompanying drawings. In the drawings:
FIG. 1 is a schematic block diagram showing system components employed in capturing video data and sound track data from a motion video recording to produce a composite picture containing several sequential still frames taken from the video recording and an associated sound chip for embodiment in an audio-enhanced print viewing device;
FIG. 2 shows a front elevation view of an audio-enhanced print viewing device useful with the system of FIG. 1; and
FIG. 3 is a side view of the viewing device of FIG. 2 showing an integrated sound playback device mounted on the back of the viewing device.

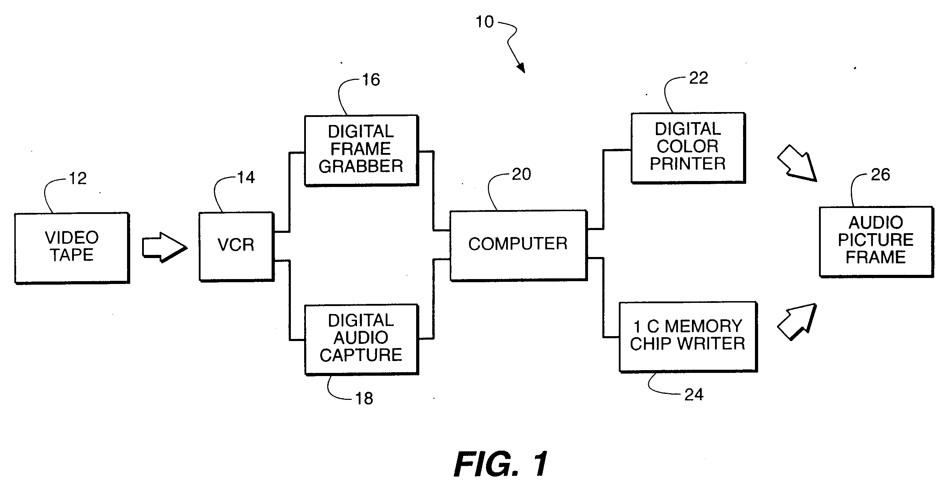

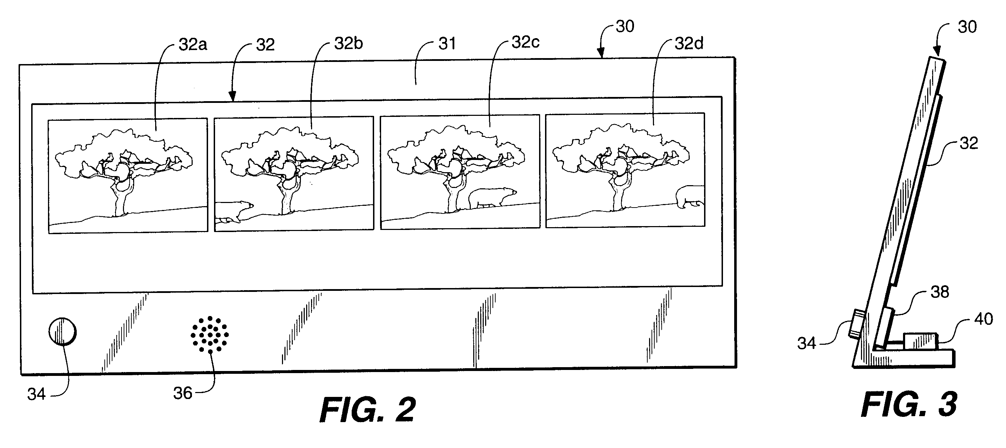

This invention is a method and apparatus to reproduce, display and play back still images with audio which had previously been captured on electronic recording media such as analog or digital video tape or CD-ROM. The combination of a short sequence of still frames and the continuous audio sound track transferred and stored from the same time interval provide a more realistic rendering of the motion experience when viewed and played back together. In FIG. 1, there is shown a system 10 for creating audio enhanced human-viewable images from a sequence of images originally recorded on a video tape 12. VCR 14 and digital frame grabber 16 comprise image signal reading apparatus for extracting selected time-spaced image frames from the motion sequence of image frames recorded on tape 12 as a series of digital image signals. These digital image signals are coupled to a computer 20 for storage in computer memory. A digital audio capture module 18 is provided for extracting from the audio signal recorded on tape 12 a segment of audio signal that brackets the selected time-spaced image frames extracted from the video tape. By appropriate control selection via the computer, the chosen audio segment may encompass the time frame represented by some or all of the selected time-spaced images or it may further include audio recorded before and after the selected images so as to encompass the entire motion sequence from which the image are selected. This extracted audio signal is then also stored in memory of computer 20. While the frame grabber 16 and audio capture module 18 are shown as separate units external to the computer 20, it will be appreciated that such units may also he structured as known forms of computer board units mounted internally of the computer proper. The system of the invention also includes a digital color printer 22 which may be any well known color printer such as a thermal dye transfer printer, a color digital printer or a CRT digital printer capable of producing hardcopy prints of the selected image frames stored in the memory of computer 20. An IC memory chip writer 24 is provided to record the bracketing audio stored in computer memory into audio data stored on an electronic audio chip memory device 40 (FIG. 3) such as an EEPROM. The reproduced color print and sound chip are then provided to an audio picture frame 26 where the print is mounted for viewing and the chip is electrically coupled to sound playback apparatus provided on the picture frame.

FIGS. 2 and 3 show front and side views of an exemplary audio picture frame 26 comprising a panel 30 on which the hardcopy image print 32 is mounted. Image print 32 includes a series of time-spaced images 32a-32d which represent the time-spaced image frames extracted from the complete motion sequence recorded on tape 12. The panel 30 may include and image frame 31 designed to have an aspect ratio to accommodate the series of time-spaced images 32-a-32d in a landscape format thereby allowing for simultaneous viewing of all of the selected image frames to provide an encapsulated motion impression. By means of suitable computer control of the printing operation, the images can be presented in the hardcopy print such that all of the selected images are simultaneously viewable in a viewing sequence that corresponds to their respective time position within the recorded motion sequence. Audio memory chip 40 is electrically coupled to audio playback circuits 38 which are activated by pressing an audio on button 34 to reproduce the audio from the chip 40 through a speaker 36. The audio circuits may include a timing circuit (not shown) for assuring continued operation of the playback circuits for reproduction of the entire audio segment without requiring the viewer to hold button 34 pressed for the duration of the audio segment. A battery, not shown, may be used to power the audio playback circuits or the circuits may be powered directly from a wall outlet via a power converter.

In the operation of the method of the invention, the operator inserts a video tape 12 into the VCR and initiates reproduction of the recorded images on the computer monitor. Using the computer, desired image frames are selected from a motion sequence of image frames recorded on the tape. In the case of analog video tape, the image are stored on the tape as pairs of interlaced image fields and the frame grabber is preferably operated to extract a related pair of image fields for each of the selected image frames. The desired frames are typically time spaced as shown in the example of FIG. 2, allowing the viewer to select key images displaying highlights of the motion sequence while omitting intervening images from the sequence without loss of the motion context as presented by the selected images. Again, using the computer controls, the audio is played and the audio that brackets the selected, time-spaced image frames is extracted and stored in computer memory. Once stored in memory, either or both the image and the audio data can be manipulated using well known types of image and audio data manipulation software. When the images and audio are as desired, the image data is output to the color printer for reproduction of a hardcopy print of the selected images and the audio data is output to the chip writer for transferring the audio data to the removable memory chip 40.

As thus far described, the images reproduced from the electronically recorded medium are assumed to be a sequence of conventional image prints. It is also possible to reproduce the images as hardcopy motion images containing the selected electronic images which can be viewed in sequence by altering the angle between a viewer's eyes and a lenticular or barrier screen.

It will be appreciated from the foregoing description that the system and method of the invention provides enhanced viewing satisfaction by extracting and displaying time-spaced images from a sequence of motion images coupled with extraction and playback of a selected segment of recorded audio bracketing the time-spaced images. The audio segment can be conveniently selected by the viewer through the computer operation of the audio capture module 18 while the viewer is selecting and viewing the time-spaced images from the total recorded motion sequence using the digital frame grabber 16.
- 10: audio enhanced image viewing/playback system
- 12: video tape
- 14: VCR
- 16: digital frame grabber
- 18: digital audio capture module
- 20: computer
- 22: digital color printer
- 24: IC memory chip writer
- 26: audio picture frame
- 30: image print viewing panel
- 31: image frame
- 32a-d: time-spaced images
- 34: audio ON button
- 36: speaker
- 38: audio playback circuits
- 40: audio chip memory device

## Claims

1. A method of creating audio enhanced human viewable images from a sequence of electronically recorded motion images captured with associated audio on an electronic recording medium, the method comprising:
extracting a selected plurality of image frames from the sequence of electronically recorded motion images;
transferring a segment of recorded audio bracketing the selected plurality of image frames onto an electronic memory medium;
reproducing the extracted image frames onto a human viewable image presentation medium suitable for mounting in a viewing device, the viewing device having audio playback apparatus attached thereto; and
mounting the image presentation medium and the electronic memory medium on the viewing device, the electronic memory being connected to the audio playback apparatus to enable playback of the audio segment bracketing the selected plurality of image frames from the motion sequence.

2. The method of claim 1 wherein the electronic recording medium comprises a magnetic recording tape on which image frames are recorded in a motion sequence of successive image frames; wherein the extracting step comprises extracting, with frame grabber apparatus, selected time-spaced image frames from the sequence separated by intervening non-selected image frames.

3. The method of claim 1 wherein the viewing device comprises a picture frame; the selected plurality of image frames reproduced on hardcopy image print material for simultaneous viewing of all of the selected image frames to provide an encapsulated motion impression.

4. The method of claim 3 wherein a sufficient extent of the segment of recorded audio is transferred to the memory medium such as to encompass audio recorded before and after capture of first and last selected image frames in the sequence of motion images.

5. A system for creating audio enhanced human viewable images from a sequence of motion image frames captured with an associated audio signal on an electronic image recording medium comprising:
image signal reading apparatus for extracting selected time-spaced image frames from the motion sequence as a series of digital image signals;
print apparatus for converting the selected digital image signals into human viewable images on an image presentation medium in a format enabling viewing of all of the selected images;
an image viewing device adapted to receive the image presentation medium for mounting thereon;
audio playback apparatus operatively coupled with the image viewing device;
an audio storage device separate from the electronic image recording medium;
audio signal extraction apparatus for transferring a segment of the associated audio signal bracketing the selected image frames from the electronic image recording medium onto the audio storage device; and
means for electrically coupling the audio storage device with the audio playback apparatus allowing playing the audio while viewing the selected images.

6. The system of claim 5, the format being such as to allow simultaneous viewing of the selected images.

7. The system of claim 5, the audio storage comprising a digital memory and the audio signal extraction apparatus being adapted to transfer the associated audio signal as a digital signal for storage in the digital memory.

8. The system of claim 5, wherein the audio signal extraction apparatus is adapted to transfer a segment of recorded audio to the memory medium which is of sufficient extent as to encompass audio recorded before and after capture of first and last selected image frames in the sequence of motion images.

9. The system of claim 5 wherein the print apparatus is adapted to convert the selected digital image signals into a hardcopy print.

10. The system of claim 9 wherein digital image signals are converted into a hardcopy print in which all of the selected images are simultaneously viewable in a viewing sequence corresponding to their respective time position within the recorded motion sequence.
